# EUROPEAN PATENT SPECIFICATION

(11) **EP 2 036 447 B1**
(45) Date of publication and mention of the grant of the patent: **16.12.2009**
(21) Application number: 07017564.1
(22) Date of filing: 07.09.2007
(51) Int. Cl.: A23L 3/16, A23L 3/22, A23L 1/01, A23L 1/212, A23L 1/29

(54) **Process for producing infant food products**
Herstellungsverfahren für Kindernahrungsmittel
Processus de production de produits alimentaires pour bébés

(43) Date of publication of application: 18.03.2009
(73) Proprietor: Nestec S.A., 1800 Vevey (CH)
(72) Inventor: HUTSCHENREUTHER, Simon, D-78239 Rielasingen (DE); KUSLYS, Martinas, CH- Grosshochstetten (CH); RÄDLER, Thomas, CH-8706 Meilen (CH); REINDL, Hubert, D-84577 Tussling (DE); WEBER, Frank, D-6576 Eschborn (DE)
(74) Representative: Lock, Graham James

(56) References cited:
- EP-A- 1 346 650
- WO-A-2006/029298
- US-A- 4 640 840
- US-A- 5 814 363
- US-B1- 6 676 986
- DATABASE FSTA INTERNATIONAL FOOD INFORMATION SERVICE (IFIS), FRANkFURT-MAIN, DE; Elelmezesi Ipar 1979, GASZTONYI M, HORVATH D: "Changes in the vitamin C content of fruit-containing baby foods during processing" XP002462981 Database accession no. 80-2-06-g0429

## Description

### BACKGROUND OF THE INVENTION

### Field of the Invention

The present invention relates generally to a process for producing infant food products and particularly to an aseptic process for producing infant food products in which each ingredient is processed to the minimum extent necessary so that distinctive natural colours and natural tastes of the ingredients are retained after processing.

### Description of Related Art

Exclusive breastfeeding during the first six months of life is considered the best way of providing ideal nutrition for healthy growth and development of infants. Breastfeeding also strengthens an infant's immune system, reducing the incidence and severity of infectious diseases.

Some mothers cannot breastfeed, while others, for personal, cultural, socio-economic or health reasons, choose not to. In these cases, the World Health Organisation (WHO) states that mothers should be supported in optimising their infant's nutrition.

### Infant Formula

The WHO/Food and Agricultural Organisation of the United Nations (FAO) Codex Alimentarius Commission, the UN body that sets international standards for foods, recognises that infant formula is the best substitute for breast milk. While industrially prepared infant formula cannot replicate exactly all the qualities of breast milk, it represents a considerable improvement over traditional substitutes that may be nutritionally inadequate and unsafe. These include unmodified animal milk (from cows, goats or buffaloes) and various types of cereal gruel.

Industrially prepared infant formula has been designed for use from birth as a partial or total replacement for breast milk. The Codex Alimentarius defines it as "a product based on milk of cows or other animals and/or other edible constituents of animal, including fish, or plant origin, which have proved to be suitable for infant feeding." When used as the sole source of nourishment, infant formula must meet all the energy and nutrient requirements of infants during the first six months of life.

### Complementary Foods

After an initial six months of exclusive breastfeeding, infants should start receiving nutritionally adequate, safe and appropriate complementary foods.

Complementary foods are used for weaning and they can be defined as "any food, whether manufactured or locally prepared, suitable as a complement to breast milk or to infant formula, when either becomes insufficient to satisfy the nutritional requirements of the infant." They include, for example, milk products, home made foods and processed foods based on cereals, fruits, vegetables, meat, fish and carbohydrates.

Complementary foods should be introduced into an infant's diet when breast-milk or a breast-milk substitute no longer satisfies the infant's nutritional requirements. During this transition period, as the infant's digestive system develops, the infant's diet can gradually evolve from an exclusive milk diet to a fully diversified diet similar to that of adults.

Different tastes and textures can be progressively introduced into the diet, for example through cereals mixed with the infant's usual milk or puréed fruit and vegetables, meat and fish. Later, increasingly solid foods can be added.

Many mothers, prepare complementary foods at home. It is highly unlikely, however, that these foods will supply all the calories, iron and other micronutrients needed by infants aged 6-24 months. In light of this, food manufacturers have developed calorie-optimised complementary foods enriched with micronutrients to meet these requirements. They include protein, carbohydrate and fat in varying amounts.

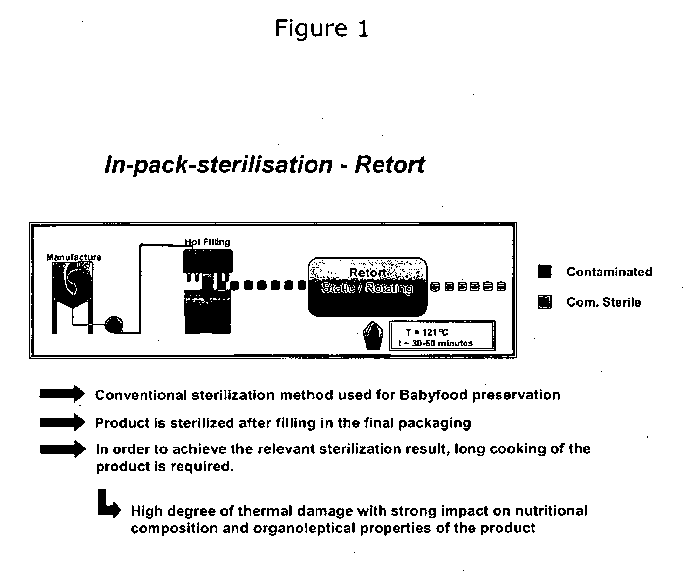

Conventionally, in order to ensure product sterility over the shelf-life of infant food products the known food products are produced by a process wherein the ingredients are sealed in small containers (typically glass jars) within the cooking vessel under pressure and high temperature for a prolonged period until the required sterility is reached. However, this process can cause loss or degradation of heat-sensitive nutrients. A schematic showing a conventional process of sterilization is illustrated in figure 1.

The traditional cooking techniques, for example retorting, sterilize foods but at the cost of losing nutrients, taste quality and visual properties. Retorting accelerates to some extent destruction of heat-labile nutrients, including vitamin C, beta-carotene, thiamin, and polyunsaturated fatty acids in the presence of residual oxygen. Taste qualities are also lost during retorting as sugars are destroyed and bitter or sour tastes (eg a canned food taste) are introduced as a result of complex chemical reactions. Retorting also results in the problem of a loss of colour from the product reducing the product's visual appeal.

In addition, it is considered that infants need foods rich in essential nutrients and they should not be exposed to harmful compounds that may be generated by cooking during processing.

Thus, there is a need for a new process for producing a range of food products that results in the products having more natural tastes and more nutrients retained after processing.

### SUMMARY OF THE INVENTION

It is, therefore, an object of the invention to provide a new process for producing a range of food products that results in the products having more natural tastes and more nutrients retained after processing.

These and other objects are addressed in one aspect of the invention by providing a process for producing an infant food product comprising a protein ingredient and a vegetable ingredient, the process comprising in a first stage, the step of separately cooking vegetables and separately cooking meat or fish to provide pre-cooked ingredients, and in a second stage, the pre-cooked ingredients are mixed and submitted to UHT processing at a high temperature for a short time to sterilize the product. Preferably, the product is aseptically filled into containers thereafter.

Preferably, separate cooking of the vegetables is achieved by subjecting frozen vegetables to steam to defrost them quickly and at the same time 'gently' cook them. Advantagously, this results in minimal destruction of the plant cell structure, minimal adverse chemical reactions and reduced leaching of water soluble vitamins.

Preferably, separate cooking of the meat or fish is achieved by frying the meat or fish.

In addition, by pre-cooking the vegetables, and frying the meat or fish separately, their own distinct flavour profiles are generated / achieved. Combining them to produce the final product before UHT processing provides the added benefit of improving the taste profile of the product.

Sterilisation of the food product is achieved by UHT (Ultra High Temperature) processing which (because the high temperature treatment is carried out for a short time) causes minimal vitamin loss and minimal chemical reactions of heat-sensitive chemical compounds in the food product. Advantagously, the loss of heat-sensitive vitamins and generation of reaction products has been found to be significantly less following the process of the invention compared to the traditional retorting process typically used for production of infant food products. Furthermore, the invention provides the advantage of intense retention of flavours and tastes from the individual ingredients used. The range of products produced according to the invention have a range of distinct tastes and they taste less like stew.

It has been found that the new approach to cooking and sterilizing the food product according to the invention subjects the components of the food to a milder heat treatment. In addition, vegetables are cooked separately from the other ingredients, allowing individualized cooking times according to the types of vegetable present. This provides the advantage that merging of flavours is prevented during early processing.

In addition, the cooking technique of the invention preserves vegetable tastes and nutrient content, and UHT heat treatment minimizes cooking time so that sterility is achived, but chemical reactions which occur in the food during processing are minimized.

Furthermore, results of sensory analysis and vitamin analysis tests have revealed that the process of the invention retains individual flavours of the ingredients. In addition, the invention provides the advantage that the natural sweetness of the ingredients used is retained, sour flavours are not introduced during processing, higher levels of thiamin are maintained after processing, polyunsaturated fatty acids are maintained, and development of complex chemical compounds during processing is minimised.

In addition, the invention provides the advantage that the process provides a healthier product than a comparative product produced by conventional retorting.

Other and further objects, features, and advantages of the present invention will be readily apparent to those skilled in the art.

### BRIEF DESCRIPTION OF THE DRAWINGS

Figure 1 illustrates a conventional process for producing and sterilizing a food product comprising retorting.

Figure 2 illustrates a process for producing and sterilizing a range of food products according to the invention. In contrast to the conventional process, the process of the invention comprises UHT treatment and aseptic filling.

Figure 3 illustrates the results of a study carried out to investigate the retention of Vitamin B1 before and after processing various food products.

Figure 4 illustrates the results of a study carried out to investigate the cooking value at various F0 values and compares the results of processing according to the invention against a conventional method involving retorting.

Figure 5 illustrates the results of a study carried out to investigate the level of furan measured in each of three different products after subjecting the product to thermal processing involving conventional retorting and processing according to the invention.

Figures 6 and 7 illustrate the results of a study carried out to investigate the concentration of furan produced as by-products at three levels of heat treatment. A vegetable product including carrots and a savoury product including cod and mixed vegetables were evaluated and the results are shown in Figures 6 and 7 respectively.

Figure 8 illustrates the results obtained in a Lab color space diagram.

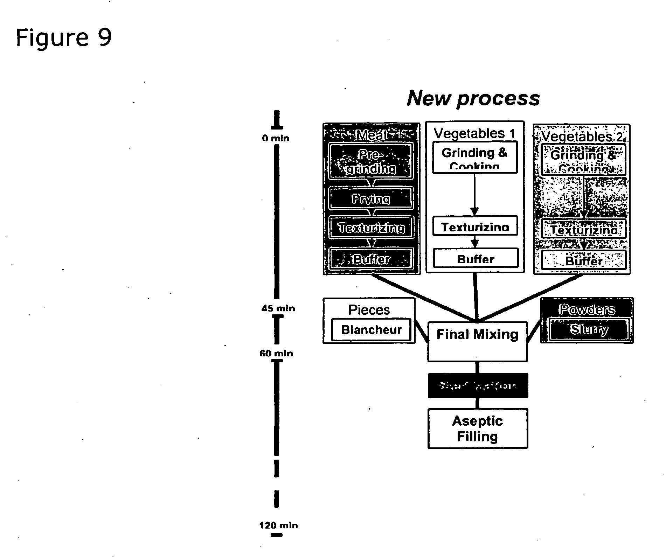

Figure 9 illustrates a schematic showing an embodiment of a process according to the invention.

Figure 10 illustrates the results of a sensory profiling study carried out to investigate the difference in taste of a product after subjecting the product to thermal processing involving conventional retorting and processing according to the invention.

### DETAILED DESCRIPTION OF THE INVENTION

### Definitions

Within the context of this specification, the term "about" means plus or minus 20%, more preferably plus or minus 10%, even more preferably plus or minus 5%, most preferably plus or minus 2%.

The term "range of infant food products" refers to a plurality of packaged nutritional compositions (eg one or more, preferably two or more) that, together with milk, and/ or cereals provide the nutritional requirements an infant. The range could be interpreted to form a kit of parts.

There are recognized stages of infant development that can be defined, wherein Stage 1 refers to about 4 to about 6 months of age; Stage 2 refers to about 6 to about 8 months of age, Stage 3 refers to about 8 to about 12 months of age, and Stage 4 (also referred to as Junior Stage) refers to about 12 to about 36 months of age. Infants falling within these different developmental stages have different nutritional requirements.

The invention is not limited to the particular methodology, protocols, and reagents described herein because they may vary. Further, the terminology used herein is for the purpose of describing particular embodiments only and is not intended to limit the scope of the present invention. As used herein and in the appended claims, the singular forms "a," "an," and "the" include plural reference unless the context clearly dictates otherwise.

Unless defined otherwise, all technical and scientific terms and any acronyms used herein have the same meanings as commonly understood by one of ordinary skill in the art in the field of the invention. Although any methods and materials similar or equivalent to those described herein can be used in the practice of the present invention, the preferred methods, devices, and materials are described herein.

All percentages for weights expressed herein are by weight of the total food product unless specifically stated otherwise.

Within this specification embodiments have been described in a way which enables a clear and concise specification to be written, but it is intended and will be appreciated that embodiments may be variously combined or separated without parting from the invention

### The Invention

In one aspect, the invention provides a process for producing an infant food product comprising a protein ingredient and a vegetable ingredient wherein, in a first stage, a vegetable ingredient is cooked, and a protein ingredient is cooked separately from the vegetable ingredient to provide pre-cooked ingredients, and in a second stage, the pre-cooked ingredients are mixed and submitted to UHT processing at a temperature of about 130°C to about 140°C for a time of about 30 seconds to about 240 seconds to sterilize the product.

Preferably, the vegetable ingredient comprises at least one, vegetable. More preferably, the vegetable ingredient comprises at least two or three vegetables.

Preferably, separate cooking of the vegetable ingredient is achieved by subjecting frozen or fresh vegetables to steam treatment. This provides the advantage that if the vegetables are frozen, they are defrosted quickly. In addition, nutrients are not leached from the vegetables. Furthermore, advantageously, the vegetables are subjected to steam treatment for a time depending on the vegetable used.

Preferably, at least two varieties of vegetables are cooked separately from each other and mixed after cooking.

Preferably, the vegetables are cooked for a time of about 1 minute to about 5 minutes at about 85°C to about 95°C. This has the advantage of 'gently' cooking the vegetables. Advantagously, this results in minimal destruction of the plant cell structure, minimal adverse chemical reactions and reduced leaching of water soluble vitamins.

Preferably, the protein ingredient comprises a source of protein selected from meat and fish.

By separately cooking the vegetable ingredients, and the meats, the meats can be fried to generate the meat flavours and the vegetables cooked separately to avoiding the blending of vegetable flavours, giving more intense flavours and reducing nutrient losses.

Preferably, separate cooking of the meat or fish is achieved by frying or pressure-cooking the meat or fish. In one embodiment, meat is fried together with onions.

Preferably the meat or fish is fried or pressure-cooked for about 10 minutes.

Preferably, the meat or fish is fried for a time depending on the meat or fish used. This is advantageous because the frying time can be tailored to provide the best result for the meat or fish used. In addition, in contrast to the traditional retorting process, the meat or fish flavour is not mixed with vegetable flavours until after the vegetables have been cooked.

In a preferred embodiment of the invention, a pasta or a cereal based ingredient, eg rice, is cooked separately from the vegetable ingredient and the protein ingredient, and it is mixed or used as a bed or base for the pre-cooked ingredients.

Preferably, the infant food products for infants from about 4 to about 6 months of age (Stage 1) comprise one or more vegetables selected from artichoke, carrot, cucumber, fennel, French bean, leek, lettuce, parsnip, potato, pumpkin, squash and zucchini.

Preferably, infant food products for infants from about 4 to about 6 months of age (Stage 1) comprise one or more meats selected from beef, veal, chicken, lamb, pork, turkey and duck.

Preferably, infant food products for infants from about 4 to about 6 months of age (Stage 1) comprise one or more fruits selected from apple, apricot, banana, blackberry, blackcurrant, bilberry, cherry, date, grape, gooseberry, guava, lemon, lime, mandarin, mango, melon, nectarine, olive, orange, peach, pear, pineapple, plum, quince, raspberry, redcurrant and watermelon.

Preferably, infant food products for infants from about 4 to about 6 months of age (Stage 1) comprise one or more aromatic herbs and spices selected from anise, balm mint, chamomile, caraway, gherkin, orange blossom and sorrel.

Preferably, infant food products for infants from about 6 to about 8 months of age (Stage 2) comprise one or more vegetables selected from artichoke, carrot, cucumber, fennel, French bean, leek, lettuce, parsnip, potato, pumpkin, squash, zucchini, broccoli, cauliflower, eggplant (aubergine), sweet potato, tomato, pea and spinach.

Preferably, infant food products for infants from about 6 to about 8 months of age (Stage 2) comprise one or more legumes selected from soy, black gram seed, chickpea, cowpea, kidney bean, lentil, mung bean and pigeon pea.

In another embodiment, infant food products for infants from about 6 to about 8 months of age (Stage 2) comprise one or more meats selected from of beef, veal, chicken, lamb, pork, turkey and duck, and/or fish.

Preferably, infant food products for infants from about 6 to about 8 months of age (Stage 2) comprise one or more fruits selected from apple, apricot, banana, blackberry, blackcurrant, bilberry, cherry, date, grape, gooseberry, guava, lemon, lime, mandarin, mango, melon, nectarine, olive, orange, peach, pear, pineapple, plum, quince, raspberry, redcurrant, watermelon, fig, papaya, passionfruit, strawberry and tangerine.

Preferably, infant food products for infants from about 6 to about 8 months of age (Stage 2) comprise one or more aromatic herbs and spices selected from anise, balm mint, chamomile, caraway, gherkin, orange blossom, sorrel, cardamom, chives, cumin, onion, saffron, savory, shallot and thyme.

Preferably, infant food products for infants from about 6 to about 8 months of age (Stage 2) comprise coconut.

Preferably, infant food products for infants from about 8 to about 12 months of age (Stage 3) comprise one or more vegetables selected from artichoke, carrot, cucumber, fennel, French bean, leek, lettuce, parsnip, potato, pumpkin, squash, zucchini, broccoli, cauliflower, eggplant (aubergine), sweet potato, tomato, pea, spinach, asparagus, beet(root), brussel sprout, cabbage, garden pea, radish and turnip.

Preferably, infant food products for infants from about 8 to about 12 months of age (Stage 3) comprise one or more legumes selected from soy, black gram seed, chickpea, cowpea, kidney bean, lentil, mung bean, pigeon pea, lima bean and winged bean.

Preferably, infant food products for infants from about 8 to about 12 months of age (Stage 3) comprise one or more meats selected from beef, veal, chicken, lamb, pork, turkey and duck, and/or fish and/or eggs.

Preferably, infant food products for infants from about 8 to about 12 months of age (Stage 3) comprise one or more fruits selected from apple, apricot, banana, blackberry, blackcurrant, bilberry, cherry, date, grape, gooseberry, guava, lemon, lime, mandarin, mango, melon, nectarine, olive, orange, peach, pear, pineapple, plum, quince, raspberry, redcurrant, watermelon, fig, papaya, passionfruit, strawberry, tangerine and rhubarb.

Preferably, infant food products for infants from about 8 to about 12 months of age (Stage 3) comprise one or more aromatic herbs and spices selected from anise, balm mint, chamomile, caraway, gherkin, orange blossom, sorrel, cardamom, chives, cumin, onion, saffron, savory, shallot, thyme, coriander, curcuma, garden sorrel, garlic, mint and vanilla.

Preferably, infant food products for infants from about 8 to about 12 months of age (Stage 3) comprise coconut and/or cocoa.

Preferably, it is preferred that infant food products for infants from about 12 to about 36 months of age (Stage Junior) comprise one or more vegetables selected from artichoke, carrot, cucumber, fennel, French bean, leek, lettuce, parsnip, potato, pumpkin, squash, zucchini, broccoli, cauliflower, eggplant (aubergine), sweet potato, tomato, pea, spinach, asparagus, beet(root), brussel sprout, cabbage, garden pea, radish, turnip, mushroom and watercress.

Preferably, infant food products for infants from about 12 to about 36 months of age (Stage Junior) comprise one or more legumes selected from soy, black gram seed, chickpea, cowpea, kidney bean, lentil, mung bean, pigeon pea, lima bean and winged bean.

Preferably, infant food products for infants from about 12 to about 36 months of age (Stage Junior) comprise one or more meats selected from beef, veal, chicken, lamb, pork, turkey, duck, and/or fish, and/or eggs and/or crustaceans.

Preferably, infant food products for infants from about 12 to about 36 months of age (Stage Junior) comprise one or more fruits selected from apple, apricot, banana, blackberry, blackcurrant, bilberry, cherry, date, grape, gooseberry, guava, lemon, lime, mandarin, mango, melon, nectarine, olive, orange, peach, pear, pineapple, plum, quince, raspberry, redcurrant, watermelon, fig, papaya, passionfruit, strawberry, tangerine, rhubarb, grapefruit and kiwi.

Preferably, infant food products for infants from about 12 to about 36 months of age (Stage Junior) comprise one or more aromatic herbs and spices selected from anise, balm mint, chamomile, caraway, gherkin, orange blossom, sorrel, cardamom, chives, cumin, onion, saffron, savory, shallot, thyme, coriander, curcuma, garden sorrel, garlic, mint, vanilla, basil, bay laurel, chervil, cinnamon, clove, ginger, liquorice, mace, marjoram, nutmeg, oregano, parsley, pepper, rosemary, sage and terragon.

Preferably, infant food products for infants from about 12 to about 36 months of age (Stage Junior) comprise one or more nuts selected from coconut, cocoa, almond, beechnut, brazil nut, cashew nut, chestnut, hazelnut, macadamia nut, pecan nut, pistachio nut and walnut.

In a preferred embodiment the process additionally includes sterilizing packaging (aseptic filling technology) for the food product and filing the packaging with the food product under an aseptic environment. Advantagously, the filled packaging is not subjected to high heat treatment with the product and packaging does not take place at high temperature. This process is ideally suited for new packaging materials such as plastics (eg polypropylene). This provides the advantage that glass containers are not required - migration from the seal between the glass and the cap to the food product is reduced and the risk of glass splinters being introduced to the food product is removed. In addition, the packaging material is easy to sterilize. In particular, the removal of hydrogen peroxide is difficult to achieve in preformed containers.

Preferably, the containers for the food product are produced in the same production line as the food product so that the production of the containers for the food product is an integral part of the process. This provides the advantage that the containers are formed just prior to filling with food product and the risk of contamination is reduced.

In a further aspect, the invention provides a range of infant food products produced according to the invention.

Preferably, the range of products comprises at least one food product suitable for each stage of infant development.

Preferably, the range of products comprises two or more food products suitable for each stage of infant development. More preferably, the range of products comprises at least a vegetable based product and a fruit based product for each stage of infant development. More preferably, the range of products comprises a plurality of vegetable based products and fruit based products for each stage of infant development.

Preferably, the range of products comprises at least a vegetable based product and a fruit based product for stage 1 of infant development.

Preferably, the range of products comprises at least a vegetable based product, a complete meal and a fruit based product for stage 2 of infant development.

Preferably, the range of products comprises at least a vegetable based product, a complete meal and a fruit based product for stage 3 of infant development.

Preferably, the range of products comprises at least a vegetable based product, a complete meal and a fruit based product for stage 4 of infant development.

In a further aspect, the invention provides equipment suitable for producing a range of infant food products according to the invention.

Preferably, the equipment comprises a cooker for cooking vegetables, a frier for frying meat or fish, a mixer, UHT apparatus, and apparatus for cold aseptic filling of aseptic containers with the food product wherein the UHT apparatus comprises tubing for moving food product from the mixer to the apparatus for cold aseptic filling and preferably a texturizer.

Preferably, the tube comprises a conduit annular in cross section for carrying out UHT treatment on food products having solid pieces (Stage 3 and Junior Stage products) or a plurality of conduits circular in cross-section for carrying out UHT treatment on homogenous food products (Stage 1 and Stage 2 products).

In other aspects, the invention provides a range of products produced using the process of the invention and the product produced using the apparatus of the invention.

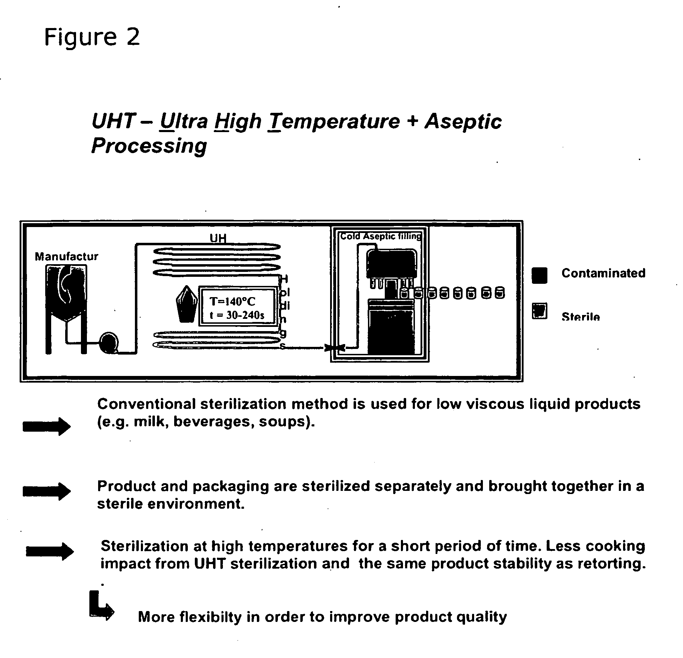

A traditional process for producing infant food products comprises sterilization of the product and packaging in glass jars. This is shown schematically in Figure 1. Compared to the known process, the process of the invention requires a lower overall heat treatment of the product to attain sterility. A process according to the invention is shown schematically in Figure 2. Without wishing to be bound by theory, it is thought that this results from the fact that the rate of increase in heat inactivation of micro-organisms (F-value) with the increase in temperature is greater than the rate of increase of cooking reactions. So that the F0 (sterility) is reached in a shorter period of time by a high rate of heating and final temperature, and the product will have received less total cooking than if the rate of heating is low and the F0 requires a long time to reach sterility. (The F0 value is a known measure of the time required to kill clostridium botulinum bacteria).

### EXAMPLES

This invention can be further illustrated by the following examples although it will be understood that these examples are included merely for purposes of illustration and are not intended to limit the scope of the invention unless otherwise specifically indicated.

### Exemplary Food Products

### Example 1

The following ingredients were used to produce a Stage 2 complete meal.

**List of ingredients for stage 2 complete meal**

| Ingredient | Amount per 100g (g) |
|---|---|
| POTATO FLAKES | 4.000 |
| CARROT | 30.000 |
| Lamb frozen | 8.500 |
| RICE SEMOLINA | 2.000 |
| Parsnip frozen | 5.000 |
| Sweetcorn frozen | 3.000 |
| RAPESEED OIL LOW ERUCIC (CANOLA) | 0.600 |
| SUNFLOWER OIL | 0.400 |
| Onion 10 mm frozen | 4.000 |
| WATER | 42.500 |

### Example 2

The following ingredients were used to produce a Stage 3 complete meal.

**List of ingredients for stage 3 complete meal**

| Ingredient | Amount per 100g (g) |
|---|---|
| Pasta spaghetti short | 8.000 |
| Beef frozen | 8.000 |
| CARROT | 20.000 |
| Tomato puree | 5.000 |
| RAPESEED OIL LOW ERUCIC (CANOLA) | 0.800 |
| SUNFLOWER OIL | 0.400 |
| Bell pepper red 10mm frozen | 4.000 |
| Onion 10 mm frozen | 3.000 |
| Thyme frozen | 0.100 |
| WATER | 50.700 |

### Example 3

The following ingredients were used to produce a Junior Stage complete meal.

**List of ingredients for Junior Stage complete meal**

| Ingredient | Amount per 100g (g) |
|---|---|
| Pasta spaghetti short | 8.000 |
| Beef frozen | 8.000 |
| CARROT | 20.000 |
| Tomato puree | 5.000 |
| RAPESEED OIL LOW ERUCIC (CANOLA) | 0.800 |
| SUNFLOWER OIL | 0.400 |
| Bell pepper red 10mm frozen | 4.000 |
| Onion 10 mm frozen | 3.000 |
| Thyme frozen | 0.100 |
| WATER | 50.700 |

### Tests and Data

In order to study the impact of the process of the invention on the quality of final products a number of studies have been carried out as follows.

### 1) Retention of thiamin (vitamin B1 - a key heat-sensitive nutrient).

### 2) Evaluation of the "cooking value" of retorting versus UHT processing

Both of these tests demonstrate the lower destruction of ingredients/ nutrients in the products produced according to the invention.

### 3) Furan formation.

This undesirable by-product of the cooking process can be demonstrated to be lower in the products produced according to the invention.

### 4) Retention of product colour.

The thermal processing of a food product, to achieve sterility, often results in the degredation of the colour of key raw materials. This is a key visual quality parameter noted by the consumer.

### 1) Retention of Thiamin (Vitamin B1)

Using a heat-sensitive nutrient as a 'tracer' in the product to evaluate process losses is a well recognised methodology in food science. Thiamin (vitamin B1) was chosen as a key heat-sensitive nutrient for in-depth evaluation. Since the natural level of this nutrient is low in the final product the amounts used were fortified for the purpose of the test.

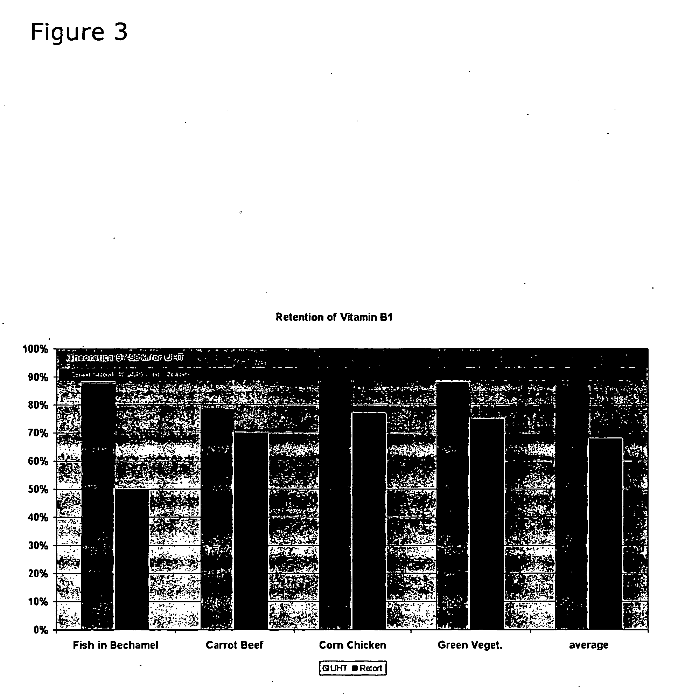

A study was carried out using four different product types. All products were fortified with levels of thiamin between 0.7 and 1 mg/ 100g. Each product was cooked by retorting in glass jars and by the process of the invention and then the resulting retention of thiamin compared. The results are shown in Figure 3.

The results show:
Average retention of thiamin post-retorting in glass jars was 67%.
Average retention of thiamin post-processing according to the invention was 89%.

Thus, it is clear that the process of the invention significantly reduced the losses of thiamin retaining 89% of the thiamin added to the products. Without wishing to be bound by theory, it is thought that this improved retention according to the invention is achieved because:
a) the process of the invention minimizes leaching of water-soluble vitamins, as occurs if the ingredients are cooked in excess water;
b) the destruction of the food matrix is limited i.e. it is a gentle process;
c) the heat treatment is significantly less using the process of the invnetion compared to conventional retorting;
d) The lower heat treatment in a process according to the invention compared to retorted products in glass jars, and the use of separate pre-cooking of the ingredients helps to preserve the water-soluble and heat-sensitive vitamins at a higher level and preserve more of the natural ingredient.

### 2) Evaluation of Cooking Value

Products can be evaluated for the effect of temperature and time (calculated cooking value- C value) on product quality parameters (e.g. texture, taste, colour, nutrient content) . Some degradation of quality parameters occurs with the achievement of process sterilization values (F0) during a thermal process. Products with a lower C-value have less destruction of their ingredients and nutrients and give a better appearance visually.

A study was carried out with a cod and mixed vegetable savoury meal to evaluate the impact of process conditions on the cooking value.

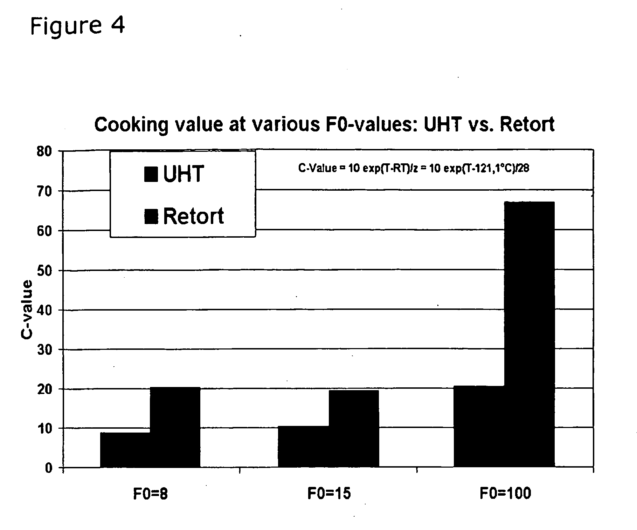

Figure 4, shows that at all three F0 (product sterility) values, retorting of the same product gave a higher C-value than processing according to the invention. In fact, at the highest sterilization value (F0= 100) the UHT-processed product has a significantly lower C-value than the same product cooked and sterilized by retorting. This demonstrates that over a wide range of sterilization conditions UHT processing provides is superior results to a similar process retorting.

### 3) Furans Formation

Furans are heterocyclic organic compounds derived from thermal decomposition of large aromatic molecules in food. They are typically measured as an example of the formation of advanced glycosylation end products (AGE's) in a food matrix. Long chain polyunsaturated fatty acids (LC-PUFAs) and vitamin C are key precursors of furans in dry and aqueous food systems. The furan compounds formed in foods vary widely in their toxicity but in general they are known to impair growth and development (especially the immune and nervous system) and may, over time, lead to cancer. Thus, foods having low furan concentrations are desired. Measurement of the formation of furans during processing according to the invention was therefore used as a marker for over-processing and the formation of AGEs.

A study was carried out to observe the effect of processing on fish oil (a rich source of LC-PUFAs) and vitamin C added into the matrix of the product. The aim of the study was to measure the amount of furan formed during processing of a food product.

The product used in the study was a vegetable and veal savoury meal with/ without added fish oil and vitamin C.

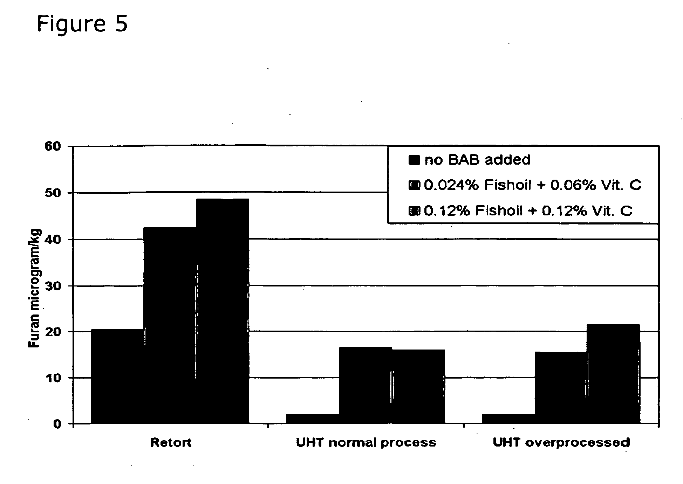

Figure 5 shows the level of furan measured in each of the three products after subjecting the product to thermal processing involving conventional retorting and processing according to the invention.

Remarkably, even when the process of the invention was used to "overprocess" the food product by carrying out UHT treatment for an extended period, furan production was reduced compared to a similar product produced by retorting. The results show that the addition of fish oil and vitamin C resulted in higher levels of furans being produced but this effect was not dose-dependent.

For comparison, a food product having the same ingredients as a food product produced according to the invention was processed by retorting. This resulted in a food product having increased furan concentrations, with a 100 % increase in production following the addition of fish oil, and a further small increase at a higher level of fish oil addition.

To study the effect of over-processing further a second study was carried out.

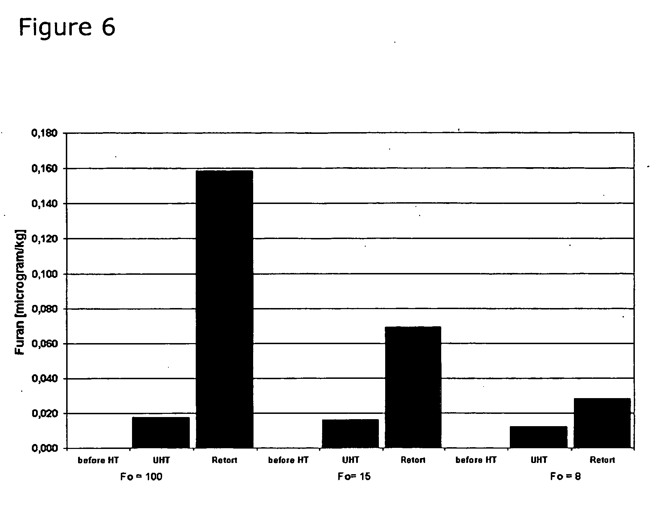

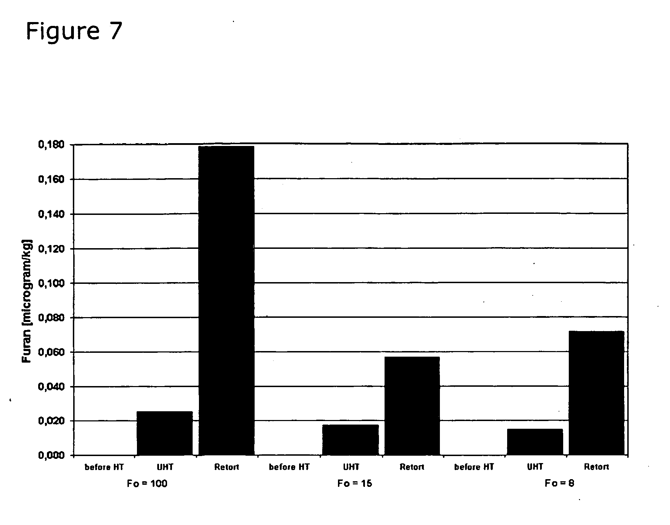

A vegetable product including carrots and a savoury product including cod and mixed vegetables were evaluated for furans at three levels of heat treatment. The results are shown in Figures 6 and 7 respectively.

In the first test, the food product was processed by retorting at high sterilization conditions - highest sterilization treatment (in the figure this is represented by F0=100).

In the second test, the food product was processed by retorting at intermediate sterilization conditions - intermediate sterilization (in the figure this is represented by F0=15).

In the third test, the food product was processed by retorting at low sterilization conditions - lowest sterilization treatment (in the figure this is represented by F0=8).

For direct comparison, products having the same ingredients were processed according to the invention and the temperature for UHT treatment was varied.

The results showed that:
a) Processing the food product by retorting to an F0=100 resulted in a high level of furan in both the vegetable and the savoury products. This level of F0 is not typical (typical values are between F0=8 and F0=15) but was used to test the products under extreme conditions to measure furan formation;
b) As indicated in Figures 6 & 7, only low levels of furans were developed following processing according to the invention at both F0=8 and 15.
c) In all tests, the savoury meal had higher levels of furan after processing than the vegetable recipe (possibly due to the presence of naturally occurring LC-PUFAs), but these differences were small compared to the effect of heat treatment on the product as shown by the comparisons between a food product processed by retorting versus a food product having the same ingredients produced according to the invention.

### 4) Product colour retention.

Some of the key raw materials in food products are vegetables (and fruits) which are naturally brightly coloured. The existence of these colours in the final product is an indication to a consumer that the product is of a high quality. In view of this, there is a need for products that retain the natural colour of the ingredients after processing.

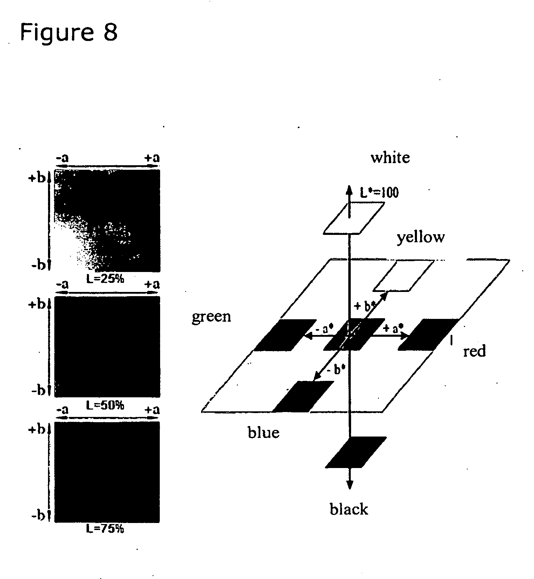

A study was carried out on a range of savoury meal products to evaluate the impact of thermal processing on colour. The trimulus colour parameters L, a and b were recorded using a Color Sphere, as indicators of the product colour characteristic. The products were evaluated before processing and then after both retorting and processing according to the invention. Figure 8 shows the results obtained in a Lab color space diagram.

The following table shows the results in numeric form of the impact on colour after processing. "Before HT" shows the values obtained before heat treatment. "UHT" shows the values obtained after processing according to the invention and "Retort" shows the values obtained after processing the product by conventional retorting.

| **Carrots** | | | |
|---|---|---|---|
| | **before HT** | **UHT** | **Retort** |
| L | 30,47 | 27 ,03 | 25,61 |
| a | 21,62 | 19,42 | 18,59 |
| b | 45,2 | 42,34 | 41,23 |
| | | 24,9 | 48,6 |
| Delta E | ∅ | 5,0 | 7,0 |

| **Carrots with Beef** | | | |
|---|---|---|---|
| | **before HT** | **UHT** | **Retort** |
| L | 46,19 | 46,91 | 47,5 |
| a | 22,74 | 21,98 | 20,89 |
| b | 28,32 | 28,82 | 29,11 |
| | | 1,3 | 5,8 |
| Delta E | ∅ | 1,2 | 2,4 |

| **Peas** | | | | |
|---|---|---|---|---|
| | **before HT** | **UHT 125°C, 45s** | **Retort** | **UHT 145°C, 45s** |
| L | 54,09 | 53,81 | 54,08 | 54 |
| a | -14,63 | -6,31 | -1,36 | -3 |
| b | 43,79 | 41,8 | 41,78 | 41,27 |
| | | 73,3 | 180,1 | 141,6 |
| Delta E | ∅ | 8,6 | 13,4 | 11,9 |

| **Turkey with Rice Zucchini** | | | |
|---|---|---|---|
| | **before HT** | **UHT** | **Retort** |
| L | 53,16 | 52,85 | 52,2 |
| a | 0,16 | 1,74 | 3,88 |
| b | 18,57 | 19,37 | 19,14 |
| | | 3,2 | 15,1 |
| Delta E | ∅ | 1,8 | 3,9 |

The total Hunter colour difference Delta E which combines L, a and b is commonly used to compare the overall colour difference between two products. The colour difference Delta E before and after heat treatment was higher for the products processed by conventional retorting than for all products having the same ingredients produced by processing according to the invention.

This clearly demonstrates that products were found to retain their natural colour better following processing according to the invention compared to products having the same ingredients, but processed by conventional retorting.

### 5) Taste

The high levels of heat treatment required by retorting food products leads to an increase in Maillard reactions with the development of more intense 'meaty' flavours. However, prolonged cooking can also develop complex chemical compounds with bitter or sour tastes. Tastes referred to as "off-notes" (eg a canned food taste) can develop. For example, vegetables can develop a rancid off-taste by the activity of lipoxygenase which is suppressed by freezing.

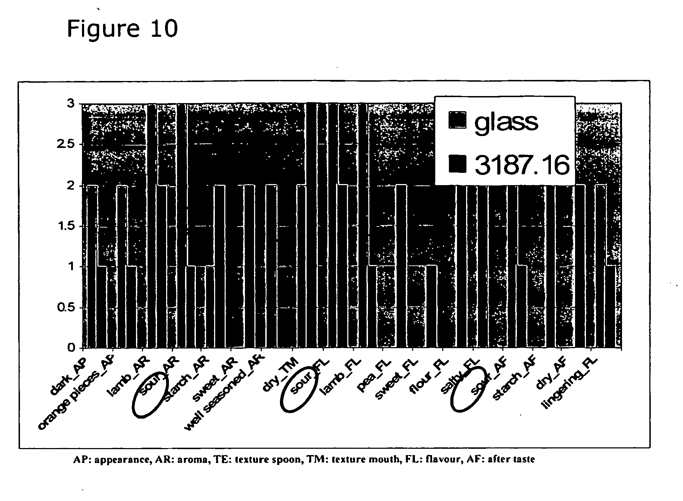

Sensory analysis of food products processed according to the invention compared to food products produced using the same ingredients, but processed by conventional retorting demonstrates specific taste differences. The test results of sensory profiling are shown in Figure 10. The results show the differences in the sensory profiles between a retorted product comprising lamb, green vegetables and potato and product produced according to the invention having the same ingredients.

In summary, the results of the sensory analysis show:
■ **Product processed according to the invention:**
   - aroma: more starch-like, more sweet
   - texture mouth: more dry
   - flavour: more pea-like, more sweet, more flour-like
   - after taste: more starch-like, more dry
■ **Product processed by conventional retorting:**
   - appearance: more dark , more orange pieces
   - aroma: more lamb-like, more sour, more well-seasoned
   - flavour: more sour, more lamb-like, more salty
   - after taste: more sour, more lingering

In the specification, there have been disclosed typical preferred embodiments of the invention and, although specific terms are employed, they are used in a generic and descriptive sense only and not for purposes of limitation, the scope of the invention being set forth in the following claims. Obviously many modifications and variations of the present invention are possible in light of the above teachings.

## Claims

1. A process for producing an infant food product comprising a protein ingredient and a vegetable ingredient wherein, in a first stage, a vegetable ingredient is cooked, and a protein ingredient is cooked separately from the vegetable ingredient to provide pre-cooked ingredients, and in a second stage, the pre-cooked ingredients are mixed and submitted to UHT processing at a temperature of about 130°C to about 140°C for a time of about 30 seconds to about 240 seconds to sterilize the product.

2. A process according to claim 1 wherein the vegetable ingredient comprises at least one, vegetable, optionally comprising at least two or three vegetables.

3. A process according to claim 1 or 2, wherein separate cooking of the vegetable ingredient is achieved by subjecting frozen or fresh vegetables to steam treatment.

4. A process according to any preceding claim wherein at least two varieties of vegetables are cooked separately from each other and mixed after cooking.

5. A process according to any preceding claim wherein the vegetables are cooked for a time of about 1 minute to about 5 minutes at about 85°C to about 95°C.

6. A process according to claim 1 or 2 wherein the protein ingredient comprises a source of protein selected from meat and fish.

7. A process according to claim 6 wherein the meat or fish is cooked separately by frying it or pressure-cooking it for a time of about 10 minutes.

8. A process according to any preceding claim, wherein in the first stage a pasta or a cereal based ingredient, eg rice, is cooked separately from the vegetable ingredient and the protein ingredient, and in a second stage it is mixed with the pre-cooked ingredients.

9. A process according to any preceding claim wherein the infant food products for infants from about 4 to about 6 months of age (Stage 1) comprise one or more vegetables selected from artichoke, carrot, cucumber, fennel, French bean, leek, lettuce, parsnip, potato, pumpkin, squash and zucchini.

10. A process according to any preceding claim wherein the infant food products for infants from about 4 to about 6 months of age (Stage 1) comprise legume soy.

11. A process according to any preceding claim wherein the infant food products for infants from about 4 to about 6 months of age (Stage 1) comprise one or more meats selected from beef, veal, chicken, lamb, pork, turkey and duck.

12. A process according to any preceding claim wherein the infant food products for infants from about 4 to about 6 months of age (Stage 1) comprise one or more fruits selected from apple, apricot, banana, blackberry, blackcurrant, bilberry, cherry, date, grape, gooseberry, guava, lemon, lime, mandarin, mango, melon, nectarine, olive, orange, peach, pear, pineapple, plum, quince, raspberry, redcurrant and watermelon.

13. A process according to any preceding claim wherein the infant food products for infants from about 4 to about 6 months of age (Stage 1) comprise one or more aromatic herbs and spices selected from anise, balm mint, chamomile, caraway, gherkin, orange blossom and sorrel.

14. A process according to any preceding claim wherein the infant food products for infants from about 6 to about 8 months of age (Stage 2) comprise one or more vegetables selected from artichoke, carrot, cucumber, fennel, French bean, leek, lettuce, parsnip, potato, pumpkin, squash, zucchini, broccoli, cauliflower, eggplant (aubergine), sweet potato, tomato, pea and spinach.

15. A process according to any preceding claim wherein the infant food products for infants from about 6 to about 8 months of age (Stage 2) comprise one or more legumes selected from soy, black gram seed, chickpea, cowpea, kidney bean, lentil, mung bean and pigeon pea.

16. A process according to any preceding claim wherein the infant food products for infants from about 6 to about 8 months of age (Stage 2) comprise one or more meats selected from of beef, veal, chicken, lamb, pork, turkey and duck, and/or fish.

17. A process according to any preceding claim wherein the infant food products for infants from about 6 to about 8 months of age (Stage 2) comprise one or more fruits selected from apple, apricot, banana, blackberry, blackcurrant, bilberry, cherry, date, grape, gooseberry, guava, lemon, lime, mandarin, mango, melon, nectarine, olive, orange, peach, pear, pineapple, plum, quince, raspberry, redcurrant, watermelon, fig, papaya, passionfruit, strawberry and tangerine.

18. A process according to any preceding claim wherein the infant food products for infants from about 6 to about 8 months of age (Stage 2) comprise one or more aromatic herbs and spices selected from anise, balm mint, chamomile, caraway, gherkin, orange blossom, sorrel, cardamom, chives, cumin, onion, saffron, savory, shallot and thyme.

19. A process according to any preceding claim wherein the infant food products for infants from about 6 to about 8 months of age (Stage 2) comprise coconut.

20. A process according to any preceding claim wherein the infant food products for infants from about 8 to about 12 months of age (Stage 3) comprise one or more vegetables selected from artichoke, carrot, cucumber, fennel, French bean, leek, lettuce, parsnip, potato, pumpkin, squash, zucchini, broccoli, cauliflower, eggplant (aubergine), sweet potato, tomato, pea, spinach, asparagus, beet(root), brussel sprout, cabbage, garden pea, radish and turnip.

21. A process according to any preceding claim wherein the infant food products for infants from about 8 to about 12 months of age (Stage 3) comprise one or more legumes selected from soy, black gram seed, chickpea, cowpea, kidney bean, lentil, mung bean, pigeon pea, lima bean and winged bean.

22. A process according to any preceding claim wherein the infant food products for infants from about 8 to about 12 months of age (Stage 3) comprise one or more meats selected from beef, veal, chicken, lamb, pork, turkey and duck, and/or fish and/or eggs.

23. A process according to any preceding claim wherein the infant food products for infants from about 8 to about 12 months of age (Stage 3) comprise one or more fruits selected from apple, apricot, banana, blackberry, blackcurrant, bilberry, cherry, date, grape, gooseberry, guava, lemon, lime, mandarin, mango, melon, nectarine, olive, orange, peach, pear, pineapple, plum, quince, raspberry, redcurrant, watermelon, fig, papaya, passionfruit, strawberry, tangerine and rhubarb.

24. A process according to any preceding claim wherein the infant food products for infants from about 8 to about 12 months of age (Stage 3) comprise one or more aromatic herbs and spices selected from anise, balm mint, chamomile, caraway, gherkin, orange blossom, sorrel, cardamom, chives, cumin, onion, saffron, savory, shallot, thyme, coriander, curcuma, garden sorrel, garlic, mint and vanilla.

25. A process according to any preceding claim wherein the infant food products for infants from about 8 to about 12 months of age (Stage 3) comprise coconut and/or cocoa.

26. A process according to any preceding claim wherein the infant food products for infants from about 12 to about 36 months of age (Stage Junior) comprise one or more vegetables selected from artichoke, carrot, cucumber, fennel, French bean, leek, lettuce, parsnip, potato, pumpkin, squash, zucchini, broccoli, cauliflower, eggplant (aubergine), sweet potato, tomato, pea, spinach, asparagus, beet(root), brussel sprout, cabbage, garden pea, radish, turnip, mushroom and watercress.

27. A process according to any preceding claim wherein the infant food products for infants from about 12 to about 36 months of age (Stage Junior) comprise one or more legumes selected from soy, black gram seed, chickpea, cowpea, kidney bean, lentil, mung bean, pigeon pea, lima bean and winged bean.

28. A process according to any preceding claim wherein the infant food products for infants from about 12 to about 36 months of age (Stage Junior) comprise one or more meats selected from beef, veal, chicken, lamb, pork, turkey, duck, and/or fish, and/or eggs and/or crustaceans.

29. A process according to any preceding claim wherein the infant food products for infants from about 12 to about 36 months of age (Stage Junior) comprise one or more fruits selected from apple, apricot, banana, blackberry, blackcurrant, bilberry, cherry, date, grape, gooseberry, guava, lemon, lime, mandarin, mango, melon, nectarine, olive, orange, peach, pear, pineapple, plum, quince, raspberry, redcurrant, watermelon, fig, papaya, passionfruit, strawberry, tangerine, rhubarb, grapefruit and kiwi.

30. A process according to any preceding claim wherein the infant food products for infants from about 12 to about 36 months of age (Stage Junior) comprise one or more aromatic herbs and spices selected from anise, balm mint, chamomile, caraway, gherkin, orange blossom, sorrel, cardamom, chives, cumin, onion, saffron, savory, shallot, thyme, coriander, curcuma, garden sorrel, garlic, mint, vanilla, basil, bay laurel, chervil, cinnamon, clove, ginger, liquorice, mace, marjoram, nutmeg, oregano, parsley, pepper, rosemary, sage and terragon.

31. A process according to any preceding claim wherein the infant food products for infants from about 12 to about 36 months of age (Stage Junior) comprise one or more nuts selected from coconut, cocoa, almond, beechnut, brazil nut, cashew nut, chestnut, hazelnut, macadamia nut, pecan nut, pistachio nut and walnut.

32. A process according to any preceding claim wherein the the process additionally includes sterilizing packaging for the food product and filling the packaging with the food product under an aseptic environment.

33. A process according to claim 32 wherein the packaging comprises plastics containers.

34. A process according to claim 32 or 33 wherein the packaging comprises polypropylene containers.

35. A process according to any one of claims 22 to 34 wherein the food product and the packaging containers for the food product are produced in the same production line so that the production of the containers for the food product is an integral part of the process.

36. A range of infant food products obtainable according to the the process of any one of claims 1 to 35.

37. The range of products according to claim 36 which comprises at least one food product suitable for each stage of infant development.

38. The range of products according to claim 36 or 37 which comprises two or more food products suitable for each stage of infant development.

39. The range of products according to any one of claims 36 to 38 which comprises at least a vegetable based product and a fruit based product for each stage of infant development.

40. The range of products according to claim 39 which comprises a plurality of vegetable based products and fruit based products for each stage of infant development.

41. Equipment for producing a range of infant food products according to any one of claims 36 to 40 comprising a cooker for cooking vegetables, a frier for frying meat or fish, a mixer, UHT apparatus, and apparatus for cold aseptic filling of aseptic containers with the food product wherein the UHT apparatus comprises tubing for moving food product from the mixer to the apparatus for cold aseptic filling.

42. Equipment according to claim 41 wherein the tube comprises a conduit annular in cross section for carrying out UHT treatment on food products having solid pieces (Stage 3 and Junior Stage products) or a plurality of conduits circular in cross-section for carrying out UHT treatment on homogenous food products (Stage 1 and Stage 2 products).

## Patentansprüche

1. Verfahren zur Herstellung eines Kindernahrungserzeugnisses mit einem Proteinbestandteil an und einem Gemüsebestandteil, wobei in einer ersten Stufe ein Gemüsebestandteil gekocht wird und ein Proteinbestandteil gesondert von dem Gemüsebestandteil gekocht wird, um vorgekochte Bestandteile bereit zu stellen, und in einer zweiten Stufe die vorgekochten Bestandteile gemischt und einer Behandlung mit einer ultrahohen Erhitzung bei einer Temperatur von ungefähr 130 °C bis ungefähr 140 °C für eine Zeit von ungefähr 30 Sekunden bis ungefähr 240 Sekunden unterworfen werden, um das Erzeugnis zu sterilisieren.

2. Verfahren nach Anspruch 1, wobei der Gemüsebestandteil mindestens ein Gemüse und wahlweise mindestens zwei oder drei Gemüse aufweist.

3. Verfahren nach Anspruch 1 oder 2, wobei das gesonderte Kochen des Gemüsebestandteils erreicht wird, indem gefrorenes oder frisches Gemüse einer Dampfbehandlung unterworfen wird.

4. Verfahren nach einem der vorhergehenden Ansprüche, wobei mindestens zwei Arten an Gemüse voneinander gesondert gekocht und nach dem Kochen gemischt werden.

5. Verfahren nach einem der vorhergehenden Ansprüche, wobei das Gemüse für eine Zeit von ungefähr 1 Minute bis 5 Minuten bei ungefähr 85 °C bis ungefähr 95 °C gekocht wird:

6. Verfahren nach Anspruch 1 oder 2, wobei der Proteinbestandteil eine Quelle an Proteinen umfasst, die aus Fleisch oder Fisch ausgewählt worden ist.

7. Verfahren nach Anspruch 6, wobei das Fleisch oder der Fisch getrennt durch Braten oder mittels Dampfkochen für eine Zeit von ungefähr 10 Minuten gekocht worden ist.

8. Verfahren nach einem der vorhergehenden Ansprüche, wobei in der ersten Stufe ein Nudelbestandteil oder ein auf einem Getreide basierender Bestandteil, wie z. B. Reis, getrennt von dem Gemüsebestandteil gekocht und in der zweiten Stufe der Proteinbestandteil mit den vorgekochten Bestandteilen gemischt wird.

9. Verfahren nach einem der vorhergehenden Ansprüche, wobei die Kindernahrungserzeugnisse für Kleinkinder für ein Alter von ungefähr 4 bis ungefähr 6 Monaten (Stufe 1) ein oder mehrere Gemüse enthalten, die ausgewählt worden sind aus: Artischocken, Mohrrüben, Gurken, Fenchel, Bohnen, Porree, Salat, Pastinaken, Kartoffeln, Kürbissen, Riesenkürbisse und Zucchini.

10. Verfahren nach einem der vorhergehenden Ansprüche, wobei die Kindernahrungserzeugnisse für Kleinkinder für ein Alter von ungefähr 4 bis ungefähr 6 Monaten (Stufe 1) Sojahülsenfrüchte enthalten.

11. Verfahren nach einem der vorhergehenden Ansprüche, wobei die Kindernahrungserzeugnisse für Kleinkinder für ein Alter von ungefähr 4 bis ungefähr 6 Monaten (Stufe 1) ein oder mehrere Fleischbestandteile enthalten, die ausgewählt worden sind aus: Rindfleisch, Kalbfleisch, Huhn, Lamm, Schwein, Truthahn oder Ente.

12. Verfahren nach einem der vorhergehenden Ansprüche, wobei die Kindernahrungserzeugnisse für Kleinkinder für ein Alter von ungefähr 4 bis ungefähr 6 Monaten (Stufe 1) ein oder mehrere Früchte enthalten, die ausgewählt worden sind aus: Äpfeln, Aprikosen, Bananen, Brombeeren, schwarzen Johannisbeeren, Heidelbeeren, Kirschen, Datteln, Weintrauben, Stachelbeeren, Guaven, Limonen, Limetten, Mandarinen, Mangos, Melonen, Nektarinen, Oliven, Orangen, Pfirsichen, Birnen, Ananas, Pflaumen, Quitten, Himbeeren, Johannisbeeren und Wassermelonen.

13. Verfahren nach einem der vorhergehenden Ansprüche, wobei die Kindernahrungserzeugnisse für Kleinkinder für ein Alter von ungefähr 4 bis ungefähr 6 Monaten (Stufe 1) ein oder mehrere aromatische Kräuter oder Gewürze enthalten, die ausgewählt worden sind aus: Anis, Melisse, Kamille, Kümmel, Gewürzgurke, Orangenblüte und Ampfer.

14. Verfahren nach einem der vorhergehenden Ansprüche, wobei die Kindernahrungserzeugnisse für Kleinkinder für ein Alter von ungefähr 6 bis ungefähr 8 Monaten (Stufe 2) ein oder mehrere Gemüse enthalten, die ausgewählt worden sind aus: Artischocken, Mohrrüben, Gurken, Fenchel, Bohnen, Porree, Salat, Pastinaken, Kartoffeln, Kürbissen, Riesenkürbisse, Zucchini, Brokkoli, Blumenkohl, Eierfrüchte (Auberginen), Süßkartoffel, Tomaten, Erbsen und Spinat.

15. Verfahren nach einem der vorhergehenden Ansprüche, wobei die Kindernahrungserzeugnisse für Kleinkinder für ein Alter von ungefähr 6 bis ungefähr 8 Monaten (Stufe 2) ein oder mehrere Hülsenfrüchte enthalten, die ausgewählt worden sind aus: Soja, Urdbohnen, Kichererbsen, Kuhbohnen, Gemüsebohnen, Linsen, Mungobohnen und Taubenerbsen.

16. Verfahren nach einem der vorhergehenden Ansprüche, wobei die Kindernahrungserzeugnisse für Kleinkinder für ein Alter von ungefähr 6 bis ungefähr 8 Monaten (Stufe 2) ein oder mehrere Fleischbestandteile enthalten, die ausgewählt worden sind aus: Rindfleisch, Kalbfleisch, Huhn, Lamm, Schwein, Truthahn, Ente und/oder Fisch.

17. Verfahren nach einem der vorhergehenden Ansprüche, wobei die Kindernahrungserzeugnisse für Kleinkinder für ein Alter von ungefähr 6 bis ungefähr 8 Monaten (Stufe 2) ein oder mehrere Früchte enthalten, die ausgewählt worden sind aus: Äpfeln, Aprikosen, Bananen, Brombeeren, schwarzen Johannisbeeren, Heidelbeeren, Kirschen, Datteln, Weintrauben, Stachelbeeren, Guaven, Limonen, Limetten, Mandarinen, Mangos, Melonen, Nektarinen, Oliven, Orangen, Pfirsichen, Birnen, Ananas, Pflaumen, Quitten, Himbeeren, Johannisbeeren, Wassermelonen, Feigen, Papaya, Passionsfrüchten, Erdbeeren und Mandarinen.

18. Verfahren nach einem der vorhergehenden Ansprüche, wobei die Kindernahrungserzeugnisse für Kleinkinder für ein Alter von ungefähr 6 bis ungefähr 8 Monaten (Stufe 2) ein oder mehrere aromatische Kräuter oder Gewürze enthalten, die ausgewählt worden sind aus: Anis, Melisse, Kamille, Kümmel, Gewürzgurke, Orangenblüte, Ampfer, Kardamon, Schnittlauch, Kreuzkümmel, Zwiebel, Safran, Bohnenkraut, Schalotten und Thymian.

19. Verfahren nach einem der vorhergehenden Ansprüche, wobei die Kindernahrungserzeugnisse für Kleinkinder für ein Alter von ungefähr 6 bis ungefähr 8 Monaten (Stufe 2) Kokosnuss enthalten.

20. Verfahren nach einem der vorhergehenden Ansprüche, wobei die Kindernahrungserzeugnisse für Kleinkinder für ein Alter von ungefähr 8 bis ungefähr 12 Monaten (Stufe 3) ein oder mehrere Gemüse enthalten, die ausgewählt worden sind aus: Artischocken, Mohrrüben, Gurken, Fenchel, Bohnen, Porree, Salat, Pastinaken, Kartoffeln, Kürbissen, Riesenkürbisse und Zucchini, Brokkoli, Blumenkohl, Eierfrüchte (Auberginen), Süßkartoffeln, Tomaten, Erbsen, Spinat, Spargel, Rüben (Wurzeln), Rosenkohl, Weißkohl, Gartenerbsen, Rettich und Weißrüben.

21. Verfahren nach einem der vorhergehenden Ansprüche, wobei die Kindernahrungserzeugnisse für Kleinkinder für ein Alter von ungefähr 8 bis ungefähr 12 Monaten (Stufe 3) ein oder mehrere Hülsenfrüchte enthalten, die ausgewählt worden sind aus: Soja, Urdbohnen, Kichererbsen, Kuhbohnen, Gemüsebohnen, Linsen, Mungobohnen, Taubenerbsen, Limabohnen und Goabohnen.

22. Verfahren nach einem der vorhergehenden Ansprüche, wobei die Kindernahrungserzeugnisse für Kleinkinder für ein Alter von ungefähr 8 bis ungefähr 12 Monaten (Stufe 3) ein oder mehrere Fleischbestandteile enthalten, die ausgewählt worden sind aus: Rindfleisch, Kalbfleisch, Huhn, Lamm, Schwein, Truthahn, Ente und/oder Fisch und/oder Ei.

23. Verfahren nach einem der vorhergehenden Ansprüche, wobei die Kindernahrungserzeugnisse für Kleinkinder für ein Alter von ungefähr 8 bis ungefähr 12 Monaten (Stufe 3) ein oder mehrere Früchte enthalten, die ausgewählt worden sind aus: Äpfeln, Aprikosen, Bananen, Brombeeren, schwarzen Johannisbeeren, Heidelbeeren, Kirschen, Datteln, Weintrauben, Stachelbeeren, Guaven, Limonen, Limetten, Mandarinen, Mangos, Melonen, Nektarinen, Oliven, Orangen, Pfirsichen, Birnen, Ananas, Pflaumen, Quitten, Himbeeren, Johannisbeeren, Wassermelonen, Feigen, Papaya, Passionsfrüchte, Erdbeeren, Mandarinen und Rhabarber.

24. Verfahren nach einem der vorhergehenden Ansprüche, wobei die Kindernahrungserzeugnisse für Kleinkinder für ein Alter von ungefähr 8 bis ungefähr 12 Monaten (Stufe 3) ein oder mehrere aromatische Kräuter oder Gewürze enthalten, die ausgewählt worden sind aus: Anis, Melisse, Kamille, Kümmel, Gewürzgurke, Orangenblüte, Ampfer, Kardamon, Schnittlauch, Kreuzkümmel, Zwiebel, Safran, Bohnenkraut, Schalotten, Thymian, Koriander, Gelbwurzel, Sauerampfer, Knoblauch, Minze und Vanille.

25. Verfahren nach einem der vorhergehenden Ansprüche, wobei die Kindernahrungserzeugnisse für Kleinkinder für ein Alter von ungefähr 8 bis ungefähr 12 Monaten (Stufe 3) Kokosnuss und/oder Kakao enthalten.

26. Verfahren nach einem der vorhergehenden Ansprüche, wobei die Kindernahrungserzeugnisse für Kleinkinder für ein Alter von ungefähr 12 bis ungefähr 36 Monaten (Stufe Junior) ein oder mehrere Gemüse enthalten, die ausgewählt worden sind aus: Artischocken, Mohrrüben, Gurken, Fenchel, Bohnen, Porree, Salat, Pastinaken, Kartoffeln, Kürbissen, Riesenkürbisse und Zucchini, Brokkoli, Blumenkohl, Eierfrüchte (Auberginen), Süßkartoffeln, Tomaten, Erbsen, Spinat, Spargel, Rüben (Wurzel), Rosenkohl, Weißkohl, Gartenerbsen, Rettich, Weißrüben, Pilze und Wasserkresse.

27. Verfahren nach einem der vorhergehenden Ansprüche, wobei die Kindernahrungserzeugnisse für Kleinkinder für ein Alter von ungefähr 12 bis ungefähr 36 Monaten (Stufe Junior) ein oder mehrere Hülsenfrüchte enthalten, die ausgewählt worden sind aus: Soja, Urdbohnen, Kichererbsen, Kuhbohnen, Gemüsebohnen, Linsen, Mungobohnen, Taubenerbsen, Limabohnen und Goabohnen.

28. Verfahren nach einem der vorhergehenden Ansprüche, wobei die Kindernahrungserzeugnisse für Kleinkinder für ein Alter von ungefähr 12 bis ungefähr 36 Monaten (Stufe Junior) ein oder mehrere Fleischbestandteile enthalten, die ausgewählt worden sind aus: Rindfleisch, Kalbfleisch, Huhn, Lamm, Schwein, Truthahn, Ente und/oder Fisch und/oder Ei und/oder Krustentiere.

29. Verfahren nach einem der vorhergehenden Ansprüche, wobei die Kindernahrungserzeugnisse für Kleinkinder für ein Alter von ungefähr 12 bis ungefähr 36 Monaten (Stufe Junior) ein oder mehrere Früchte enthalten, die ausgewählt worden sind aus: Äpfeln, Aprikosen, Bananen, Brombeeren, schwarzen Johannisbeeren, Heidelbeeren, Kirschen, Datteln, Weintrauben, Stachelbeeren, Guaven, Limonen, Limetten, Mandarinen, Mangos, Melonen, Nektarinen, Oliven, Orangen, Pfirsichen, Birnen, Ananas, Pflaumen, Quitten, Himbeeren, Johannisbeeren, Wassermelonen, Feigen, Papaya, Passionsfrüchte, Erdbeeren, Mandarinen, Rhabarber, Pampelmusen und Kiwi.

30. Verfahren nach einem der vorhergehenden Ansprüche, wobei die Kindernahrungserzeugnisse für Kleinkinder für ein Alter von ungefähr 12 bis ungefähr 36 Monaten (Stufe Junior) ein oder mehrere aromatische Kräuter oder Gewürze enthalten, die ausgewählt worden sind aus: Anis, Melisse, Kamille, Kümmel, Gewürzgurke, Orangenblüte, Ampfer, Kardamon, Schnittlauch, Kreuzkümmel, Zwiebel, Safran, Bohnenkraut, Schalotten, Thymian, Koriander, Gelbwurzel, Sauerampfer, Knoblauch, Minze, Vanille, Basilikum, Lorbeer, Kerbel, Zimt, Gewürznelke, Ingwer, Süßholz, Muskat, Majoran, Muskatnuss, Oregano, Petersilie, Pfeffer, Rosemarie, Salbei und Estragon.

31. Verfahren nach einem der vorhergehenden Ansprüche, wobei die Kindernahrungserzeugnisse für Kleinkinder für ein Alter von ungefähr 12 bis ungefähr 36 Monaten (Stufe Junior) ein oder mehrere aromatische Nüsse enthalten, die ausgewählt worden sind aus: Kokosnüssen, Kakao, Mandeln, Bucheckern, Paranüssen, Kaschunüssen, Esskastanien, Haselnüssen, Macadamianüssen, Pekannüssen, Pistazien und Walnüssen.

32. Verfahren nach einem der vorhergehenden Ansprüche, wobei das Verfahren zusätzlich ein Sterilisieren der Verpackung für das Nahrungsmittelerzeugnis und ein Befüllen der Verpackung mit dem Nahrungsmittel in einer keimfreien Umgebung umfasst.

33. Verfahren nach Anspruch 32, wobei die Verpackung Behälter aus Kunststoff umfasst.

34. Verfahren nach Anspruch 32 oder 33, wobei die Verpackung Behälter aus Polypropylen umfasst.

35. Verfahren nach einem der Ansprüche 22 bis 34, wobei das Nahrungsmittelerzeugnis und die Verpackungsbehälter für das Nahrungsmittelerzeugnis in derselben Fertigungsanlage hergestellt werden, so dass die Herstellung der Behälter für das Nahrungsmittelerzeugnis ein wesentlicher Bestandteil des Verfahrens ist.

36. Angebot an Kindernahrungserzeugnissen, die nach dem Verfahren nach einem der Ansprüche 1 bis 35 erhalten werden können.

37. Angebot an Erzeugnissen nach Anspruch 36, das mindestens ein Nahrungsmittelerzeugnis enthält, das für jede Stufe der Entwicklung eines Kleinkindes geeignet ist.

38. Angebot an Erzeugnissen nach Anspruch 36 oder 37, das zwei oder mehr Nahrungsmittelerzeugnisse enthält, die für jede Stufe der Entwicklung eines Kleinkindes geeignet sind.

39. Angebot an Erzeugnissen nach einem der Ansprüche 36 bis 38, das für jede Stufe der Entwicklung eines Kleinkindes mindestens ein auf einem Gemüse basierendes Erzeugnis und ein auf einer Frucht basierendes Erzeugnis enthält.

40. Angebot an Erzeugnissen nach Anspruch 39, das für jede Stufe der Entwicklung eines Kleinkindes eine Anzahl an auf einem Gemüse basierenden Erzeugnissen und an auf einer Frucht basierenden Erzeugnissen enthält.

41. Anlage zur Herstellung eines Angebotes an Kindernahrungserzeugnissen nach einem der Ansprüche 36 bis 40 umfassend: ein Kochgerät zum Kochen von Gemüse, ein Bratgerät zum Braten von Fleisch oder Fisch, einen Mischer, eine Vorrichtung zur ultrahohen Erhitzung und eine Vorrichtung zum kalten keimfreien Befüllen von keimfreien Behältern mit dem Nahrungsmittelerzeugnis, wobei die Vorrichtung zur ultrahohen Erhitzung ein Rohrleitung umfasst, um das Nahrungsmittelerzeugnis von dem Mischer zu der Vorrichtung zum kalten keimfreien Befüllen zu bewegen.

42. Anlage nach Anspruch 41, wobei die Rohrleitung eine Leitungsführung mit ringförmigen Querschnitt, um eine Behandlung mit ultrahoher Erhitzung bei den Nahrungsmittelerzeugnissen durchzuführen, die feste Stücke (Erzeugnisse der Stufe 3 und der Stufe Junior) aufweisen, oder eine Anzahl an Leitungsführungen mit kreisförmigen Querschnitt umfasst, um eine Behandlung mit ultrahoher Erhitzung bei den homogenen Nahrungsmittelerzeugnissen (Erzeugnisse der Stufe 1 und der Stufe 2) durchzuführen.

## Revendications

1. Procédé de production d'un produit alimentaire pour bébé, comprenant un ingrédient protéine et un ingrédient légume, dans lequel, dans une première étape, un ingrédient légume est cuit et un ingrédient protéine est cuit séparément de l'ingrédient légume pour donner des ingrédients précuits, et dans une deuxième étape, les ingrédients précuits sont mélangés et soumis à un traitement UHT à une température d'environ 130 ° C à environ 140° C pendant une durée d'environ 30 secondes à environ 240 secondes pour stériliser le produit.

2. Procédé selon la revendication 1, dans lequel l'ingrédient légume comprend au moins un légume, éventuellement, comprend au moins deux ou trois légumes.

3. Procédé selon la revendication 1 ou 2, dans lequel la cuisson séparée de l'ingrédient légume est réalisée en soumettant des légumes congelés ou frais à un traitement vapeur.

4. Procédé selon l'une quelconque des revendications précédentes, dans lequel au moins deux variétés de légumes sont cuites séparément l'une de l'autre et mélangées après cuisson.

5. Procédé selon l'une quelconque des revendications précédentes, dans lequel les légumes sont cuits pendant une durée d'environ 1 minute à environ 5 minutes, d'environ 85° C à environ 95° C.

6. Procédé selon la revendication 1 ou 2, dans lequel l'ingrédient protéine comprend une source de protéine choisie parmi la viande et le poisson.

7. Procédé selon la revendication 6, dans lequel la viande ou le poisson est cuit(e) séparément par friture ou par cuisson vapeur pendant une durée d'environ 10 minutes.

8. Procédé selon l'une quelconque des revendications précédentes, dans lequel, à la première étape, une pâte ou un ingrédient à base de céréale, par exemple, du riz, est cuit(e) séparément de l'ingrédient légume et de l'ingrédient protéine et dans une deuxième étape, elle/il est mélangé(e) aux ingrédients précuits.

9. Procédé selon l'une quelconque des revendications précédentes, dans lequel les produits alimentaires pour bébé destinés aux enfants d'environ 4 à environ 6 mois (stade 1) comprennent un ou plusieurs légumes choisis parmi l'artichaut, la carotte, le concombre, le fenouil, le haricot vert, le poireau, la laitue, le panais, la pomme de terre, la citrouille, la courge et la courgette.

10. Procédé selon l'une quelconque des revendications précédentes, dans lequel les produits alimentaires pour bébé destinés aux enfants d'environ 4 à environ 6 mois (stade 1) comprennent du soja.

11. Procédé selon l'une quelconque des revendications précédentes, dans lequel les produits alimentaires pour bébés destinés aux enfants d'environ 4 à environ 6 mois (stade 1) comprennent une ou plusieurs viandes choisies parmi le boeuf, le veau, le poulet, l'agneau, le porc, la dinde et le canard.

12. Procédé selon l'une quelconque des revendications précédentes, dans lequel les produits alimentaires pour bébés destinés aux enfants d'environ 4 à environ 6 mois (stade 1) comprennent un ou plusieurs fruits choisis parmi la pomme, l'abricot, la banane, la mûre, le cassis, la myrtille, la cerise, la date, le raisin, la groseille à maquereau, la goyave, le citron, le citron vert, la mandarine, la mangue, le melon, la nectarine, l'olive, l'orange, la pêche, la poire, l'ananas, la prune, le coing, la framboise, la groseille et la pastèque.

13. Procédé selon l'une quelconque des revendications précédentes, dans lequel les produits alimentaires pour bébés destinés aux enfants d'environ 4 à environ 6 mois (stade 1) comprennent une ou plusieurs herbes aromatiques et épices choisis parmi l'anis, la menthe baume, la camomille, le carvi, le cornichon, la fleur d'oranger et l'oseille.

14. Procédé selon l'une quelconque des revendications précédentes, dans lequel les produits alimentaires pour bébés destinés aux enfants d'environ 6 à environ 8 mois (stade 2) comprennent un ou plusieurs légumes choisis parmi l'artichaut, la carotte, le concombre, le fenouil, le haricot vert, le poireau, la laitue, le panais, la pomme de terre, la citrouille, la courge et la courgette, le brocoli, le chou-fleur, l'aubergine, la patate douce, la tomate, le petit pois et l'épinard.

15. Procédé selon l'une quelconque des revendications précédentes, dans lequel les produits alimentaires pour bébés destinés aux enfants d'environ 6 à environ 8 mois (stade 2) comprennent un ou plusieurs légumes choisis parmi le soja, le haricot mungo, le pois chiche, les doliques, le haricot sec, la lentille, le haricot mungo et le pois cajan.

16. Procédé selon l'une quelconque des revendications précédentes, dans lequel les produits alimentaires pour bébés destinés aux enfants d'environ 6 à environ 8 mois (stade 2) comprennent une ou plusieurs viandes choisies parmi la viande, le veau, le poulet, l'agneau, le porc, la dinde et le canard, et/ou le poisson.

17. Procédé selon l'une quelconque des revendications précédentes, dans lequel les produits alimentaires pour bébés destinés aux enfants d'environ 6 à environ 8 mois (stade 2) comprennent un ou plusieurs fruits choisis parmi la pomme, l'abricot, la banane, la mûre, le cassis, la myrtille, la cerise, la date, le raisin, la groseille à maquereau, la goyave, le citron, le citron vert, la mandarine, la mangue, le melon, la nectarine, l'olive, l'orange, la pêche, la poire, l'ananas, la prune, le coing, la framboise, la groseille, la pastèque, la figue, la papaye, le fruit de la passion, la fraise et la clémentine.

18. Procédé selon l'une quelconque des revendications précédentes, dans lequel les produits alimentaires pour bébés destinés aux enfants d'environ 6 à environ 8 mois (stade 2) comprennent une ou plusieurs herbes aromatiques et épices choisis parmi l'anis, la menthe baume, la camomille, le carvi, le cornichon, la fleur d'oranger, l'oseille, la cardamome, la ciboulette, le cumin, l'oignon, le safran, la sarriette, l'échalote et le thym.

19. Procédé selon l'une quelconque des revendications précédentes, dans lequel les produits alimentaires pour bébés destinés aux enfants d'environ 6 à environ 8 mois (stade 2) comprennent de la noix de coco.

20. Procédé selon l'une quelconque des revendications précédentes, dans lequel les produits alimentaires pour bébés destinés aux enfants d'environ 8 à environ 12 mois (stade 3) comprennent un ou plusieurs légumes choisis parmi l'artichaut, la carotte, le concombre, le fenouil, le haricot vert, le poireau, la laitue, le panais, la pomme de terre, la citrouille, la courge et la courgette, le brocoli, le chou-fleur, l'aubergine, la patate douce, la tomate, le petit pois, l'épinard, l'asperge, la betterave (rouge), le chou de Bruxelles, le chou, le pois, le radis et le rutabaga.

21. Procédé selon l'une quelconque des revendications précédentes, dans lequel les produits alimentaires pour bébés destinés aux enfants d'environ 8 à environ 12 mois (stade 3) comprennent un ou plusieurs légumes choisis parmi le soja, le haricot mungo, le pois chiche, les doliques, le haricot sec, la lentille, le haricot mungo, le pois cajan, le haricot de Lima et le pois carré.

22. Procédé selon l'une quelconque des revendications précédentes, dans lequel les produits alimentaires pour bébés destinés aux enfants d'environ 8 à environ 12 mois (stade 3) comprennent une ou plusieurs viandes choisies parmi la viande, le veau, le poulet, l'agneau, le porc, la dinde et le canard, et/ou le poisson et/ou l'oeuf.

23. Procédé selon l'une quelconque des revendications précédentes, dans lequel les produits alimentaires pour bébés destinés aux enfants d'environ 8 à environ 12 mois (stade 3) comprennent un ou plusieurs fruits choisis parmi la pomme, l'abricot, la banane, la mûre, le cassis, la myrtille, la cerise, la date, le raisin, la groseille à maquereau, la goyave, le citron, le citron vert, la mandarine, la mangue, le melon, la nectarine, l'olive, l'orange, la pêche, la poire, l'ananas, la prune, le coing, la framboise, la groseille, la pastèque, la figue, la papaye, le fruit de la passion, la fraise, la clémentine et la rhubarbe.

24. Procédé selon l'une quelconque des revendications précédentes, dans lequel les produits alimentaires pour bébés destinés aux enfants d'environ 8 à environ 12 mois (stade 3) comprennent une ou plusieurs herbes aromatiques et épices choisis parmi l'anis, la menthe baume, la camomille, le carvi, le cornichon, la fleur d'oranger, l'oseille, la cardamome, la ciboulette, le cumin, l'oignon, le safran, la sarriette, l'échalote, le thym, le coriandre, le curcuma, l'oseille, l'ail, la menthe et la vanille.

25. Procédé selon l'une quelconque des revendications précédentes, dans lequel les produits alimentaires pour bébés destinés aux enfants d'environ 8 à environ 12 mois (stade 3) comprennent de la noix de coco et/ou du cacao.

26. Procédé selon l'une quelconque des revendications précédentes, dans lequel les produits alimentaires pour bébés destinés aux enfants d'environ 12 à environ 36 mois (stade junior) comprennent un ou plusieurs légumes choisis parmi l'artichaut, la carotte, le concombre, le fenouil, le haricot vert, le poireau, la laitue, le panais, la pomme de terre, la citrouille, la courge et la courgette, le brocoli, le chou-fleur, l'aubergine, la patate douce, la tomate, le petit pois, l'épinard, l'asperge, la betterave (rouge), le chou de Bruxelles, le chou, le pois, le radis, le rutabaga, le champignon et le cresson.

27. Procédé selon l'une quelconque des revendications précédentes, dans lequel les produits alimentaires pour bébés destinés aux enfants d'environ 12 à environ 36 mois (stade junior) comprennent un ou plusieurs légumes choisis parmi le soja, le haricot mungo, le pois chiche, les doliques, le haricot sec, la lentille, le haricot mungo, le pois cajan, le haricot de Lima et le pois carré.

28. Procédé selon l'une quelconque des revendications précédentes, dans lequel les produits alimentaires pour bébés destinés aux enfants d'environ 12 à environ 36 mois (stade junior) comprennent une ou plusieurs viandes choisies parmi la viande, le veau, le poulet, l'agneau, le porc, la dinde et le canard, et/ou le poisson et/ou l'oeuf et/ou les crustacés.

29. Procédé selon l'une quelconque des revendications précédentes, dans lequel les produits alimentaires pour bébés destinés aux enfants d'environ 12 à environ 36 mois (stade junior) comprennent un ou plusieurs fruits choisis parmi la pomme, l'abricot, la banane, la mûre, le cassis, la myrtille, la cerise, la date, le raisin, la groseille à maquereau, la goyave, le citron, le citron vert, la mandarine, la mangue, le melon, la nectarine, l'olive, l'orange, la pêche, la poire, l'ananas, la prune, le coing, la framboise, la groseille, la pastèque, la figue, la papaye, le fruit de la passion, la fraise, la clémentine, la rhubarbe, le pamplemousse et le kiwi.

30. Procédé selon l'une quelconque des revendications précédentes, dans lequel les produits alimentaires pour bébés destinés aux enfants d'environ 12 à environ 36 mois (stade junior) comprennent une ou plusieurs herbes aromatiques et épices choisis parmi l'anis, la menthe baume, la camomille, le carvi, le cornichon, la fleur d'oranger, l'oseille, la cardamome, la ciboulette, le cumin, l'oignon, le safran, la sarriette, l'échalote, le thym, le coriandre, le curcuma, l'oseille, l'ail, la menthe, la vanille, le basilique, le laurier, le cerfeuil, la cannelle, le clou de girofle, le gingembre, la réglisse, le macis, la marjolaine, la noix de muscade, l'origan, le persil, le poivre, le romarin, la sauge et l'estragon.

31. Procédé selon l'une quelconque des revendications précédentes, dans lequel les produits alimentaires pour bébés destinés aux enfants d'environ 12 à environ 36 mois (stade junior) comprennent une ou plusieurs noix choisies parmi la noix de coco, le cacao, l'amande, la faine, la noix du Brésil, la noix de cajou, le marron, la noisette, la noix de macadamia, la noix de pécan, la pistache et la noix.

32. Procédé selon l'une quelconque des revendications précédentes, le procédé comprenant en outre la stérilisation de l'emballage du produit alimentaire et le remplissage de l'emballage avec le produit alimentaire dans un environnement aseptique.

33. Procédé selon la revendication 32, dans lequel l'emballage comprend des récipients en plastique.

34. Procédé selon la revendication 32 ou 33, dans lequel l'emballage comprend des récipients en polypropylène.

35. Procédé selon l'une quelconque des revendications 22 à 34, dans lequel le produit alimentaire et les récipients d'emballage du produit alimentaire sont produits sur la même ligne de production de sorte que la production des récipients du produit alimentaire fasse partie intégrante du processus.

36. Série de produits alimentaires pour bébés pouvant être obtenus selon le procédé selon l'une quelconque des revendications 1 à 35.

37. Série de produits selon la revendication 36, qui comprend au moins un produit alimentaire pouvant être obtenu pour chaque stade de développement de l'enfant.

38. Série de produits selon la revendication 36 ou 37 qui comprend deux produits alimentaires ou plus, appropriés pour chaque stade du développement de l'enfant.

39. Série de produits selon l'une quelconque des revendications 36 à 38, qui comprend au moins un produit à base de légume et un produit à base de fruit pour chaque stade du développement de l'enfant.

40. Série de produits selon la revendication 39, qui comprend une pluralité de produits à base de légume et de produits à base de fruit pour chaque stade du développement de l'enfant.

41. Equipement pour la production d'une série de produits alimentaires pour bébés selon l'une quelconque des revendications 36 à 40, comprenant un cuiseur pour cuire des légumes, une friteuse pour frire la viande ou le poisson, un mélangeur, un appareil UHT et un appareil pour le remplissage aseptique à froid des récipients aseptiques avec le produit alimentaire, l'appareil UHT comprenant des tubes servant à faire évoluer le produit alimentaire du mélangeur à l'appareil pour le remplissage aseptique à froid.

42. Equipement selon la revendication 41, dans lequel les tubes comprennent un conduit de section annulaire pour réaliser le traitement UHT sur les produits alimentaires ayant des éléments solides (produits de stade 3 et stade junior) ou une pluralité de conduites de section circulaire pour réaliser un traitement UHT sur des produits alimentaires homogènes (produits de stade 1 et de stade 2).
